# EUROPÄISCHE PATENTSCHRIFT

(11) **EP 3 184 178 B1**
(45) Veröffentlichungstag und Bekanntmachung des Hinweises auf die Patenterteilung: **17.10.2018**
(21) Anmeldenummer: 15202292.7
(22) Anmeldetag: 23.12.2015
(51) Int. Cl.: B05B 15/00, B08B 17/06, B04C 5/04, B65G 53/00, F16L 43/00, B04C 5/13

(54) **PULVERBESCHICHTUNGSANLAGE ZUM BESCHICHTEN VON WERKSTÜCKEN**
POWDER COATING EQUIPMENT FOR COATING WORKPIECES
INSTALLATION DE REVETEMENT DE PIECES PAR POUDRE

(43) Veröffentlichungstag der Anmeldung: 28.06.2017
(73) Patentinhaber: J. Wagner AG, 9450 Altstätten (CH)
(72) Erfinder: Loos, Eugen, 88048 Friedrichshafen (DE); Hirt, Joachim, 88690 Uhldingen-Mühlhofen (DE)
(74) Vertreter: Nückel, Thomas

(56) Entgegenhaltungen:
- EP-A1- 0 771 991
- EP-A1- 1 020 228
- EP-A1- 1 319 442
- EP-A1- 2 784 471
- WO-A1-2009/127192
- AT-B- 183 207
- DE-A1- 1 507 817
- DE-A1- 4 112 423
- DE-A1-102009 016 045
- DE-U- 7 014 433
- DE-U1- 29 501 148
- IT-A1- MI20 111 368
- JP-A- S52 149 666
- JP-A- S56 100 662
- JP-U- S5 664 760
- US-A- 2 936 043
- US-B1- 6 951 354

## Beschreibung

### Technisches Gebiet

Die Erfindung betrifft eine Pulverbeschichtungsanlage zum Beschichten von Werkstücken mit Beschichtungspulver.

### Stand der Technik

Bei der elektrostatischen Beschichtung von Werkstücken mit Pulver wird dieses über eine oder mehrere Pulversprühpistolen auf das zu beschichtende Werkstück aufgesprüht. Die zu beschichtenden Werkstücke befinden sich während des Beschichtungsvorgangs in der Regel innerhalb einer Pulverbeschichtungskabine, die im Folgenden auch kurzum als Kabine bezeichnet wird. Da beim Beschichtungsvorgang nicht alle von den Sprühpistolen versprühten Pulverpartikel auf den zu beschichtenden Werkstücken haften bleiben, muss das überschüssige Pulver, welches auch als Overspray bezeichnet wird, aus der Kabine wieder entfernt werden. Dies ist zum einen deshalb notwendig, weil die Umgebung außerhalb der Kabine frei von Pulverstaub zu halten ist. Zum anderen steigt die Explosionsgefahr bei einer Überschreitung einer bestimmten Pulverkonzentration durch die in der Kabine schwebende Pulverstaubwolke. Dies gilt es zu vermeiden. Überschüssiges Pulver bereits während des Betriebs aus dem Inneren der Kabine abzusaugen hat zudem den Vorteil, dass bei einem Farbwechsel die erforderlichen Reinigungsmaßnahmen weniger Zeit in Anspruch nehmen, weil sich grundsätzlich weniger Restpulver in der Kabine befindet. Werden die Kabine und das Absaugsystem nicht ausreichend gereinigt, kann es nach einem Farbwechsel zu einer unerwünschten Farbverschleppung kommen.

Um das Overspray aus der Kabine zu entfernen, wird es zusammen mit der in der Kabine befindlichen Luft als Pulver-Luftgemisch aus der Kabine gesaugt und einem Zyklon zugeführt, der als Monozyklon ausgebildet sein kann. Ein derartiger Zyklon ist aus der Druckschrift EP 1 319 442 A1 bekannt. Das Pulver-Luftgemisch strömt tangential in den Zyklon und im Zyklon spiralförmig nach unten. Dabei werden die Pulverpartikel durch die bei der Rotation des Pulver-Luftstroms entstehende Zentrifugalkraft nach aussen an die Aussenwand des Zyklons gedrückt. Die Pulverpartikel werden nach unten in Richtung des Pulverauslasses des Zyklons gefördert und dort gesammelt, die von den Pulverpartikeln befreite Luft wird über das Zentralrohr abgesaugt. Der so gereinigte Luftstrom wird häufig noch einem Nachfilter zugeführt, um auch noch das in der Luft verbliebene restliche Pulver herauszufiltern.

In der Regel sind hierfür zwischen 15000 und 30000 m³ Luft pro Stunde erforderlich, die von einem elektrisch betriebenen Ventilator oder Gebläse bereitgestellt werden. Die Energiekosten hierfür sind nicht unerheblich.

### Darstellung der Erfindung

Eine Aufgabe der Erfindung ist es, eine Pulverbeschichtungsanlage zum Beschichten von Werkstücken mit Beschichtungspulver anzugeben, bei der der Energieverbrauch der Pulverbeschichtungsanlage minimiert wird. Insbesondere der (elektrische) Leistungsbedarf für die Bereitstellung der Saugluft für den Zyklon soll minimiert werden. Dies soll jedoch nicht auf Kosten der Zeit gehen, die für einen Farbwechsel nötig ist. Der Farbwechsel soll also genauso schnell oder noch schneller von statten gehen können, ohne dass es zu einer Farbverschleppung kommt.

Vorteilhafter Weise ist die Pulverbeschichtungsanlage strömungstechnisch dahingehend optimiert, dass sich kein oder nur sehr wenig Pulver ablagern beziehungsweise ansintern kann. Auch dies dient dem schnellen Farbwechsel ohne Farbverschleppung. Der Zeitaufwand für die Reinigung der Pulverbeschichtungsanlage wird minimiert.

Die Aufgabe wird durch eine Pulverbeschichtungsanlage zum Beschichten von Werkstücken mit Beschichtungspulver mit den in Patentanspruch 1 angegebenen Merkmalen gelöst.

Die erfindungsgemässe Pulverbeschichtungsanlage zum Beschichten von Werkstücken mit Beschichtungspulver weist eine Beschichtungskabine und ein Zyklon auf, wobei die Beschichtungskabine über eine Restpulverrohrleitung mit dem Zyklon verbunden ist. Der Zyklon umfasst im Auslasstrakt ein Tauchrohr, in dem ein Leitapparat angeordnet ist, der mehrere Schaufeln aufweist. Diese sind derart ausgebildet, dass der auf die Schaufeln auftreffende Luftwirbel wenigstens teilweise in einen wirbelfreien Luftstrom umlenkbar ist.

Falls die Längsachse des Leitapparats vertikal verläuft, sind die Schaufeln derart ausgebildet, dass der auf die Schaufeln auftreffende Luftwirbel wenigstens teilweise in einen vertikalen Luftstrom umlenkbar ist.

Vorteilhafte Weiterbildungen der Erfindung ergeben sich aus den in den abhängigen Patentansprüchen angegebenen Merkmalen.

Bei einer Ausführungsform der erfindungsgemässen Pulverbeschichtungsanlage sind die Schaufeln radial zur Längsachse des Leitapparats angeordnet. Ein solcher Leitapparat kann einfach und kostengünstig hergestellt werden.

Bei einer weiteren Ausführungsform der erfindungsgemässen Pulverbeschichtungsanlage sind die Schaufeln im Einlassbereich gekrümmt. Falls die Längsachse des Leitapparats vertikal verläuft, befindet sich der gekrümmte Bereich unten an den Schaufeln. Dadurch kann der Luftwirbel noch besser in einen vertikalen Luftstrom umgelenkt werden. Die Luft prallt nicht auf die Schaufeln, sondern trifft in einem flachen Winkel auf sie, so dass Energieverluste weiter reduziert werden.

Es ist von Vorteil, wenn wenigstens eine der Schaufeln im Einlassbereich mit der Längsachse des Leitapparats einen Winkel zwischen 40° und 70° und noch besser Winkel zwischen 53° und 60° einschliesst.

Bei einer zusätzlichen Ausführungsform der erfindungsgemässen Pulverbeschichtungsanlage sind die Schaufeln im Auslassbereich geradlinig ausgebildet. Falls die Längsachse des Leitapparats senkrecht verläuft, befindet sich der geradlinige Bereich oben an den Leitschaufeln. Auch dadurch werden die Luftwirbel noch besser in einen vertikalen Luftstrom umgelenkt.

Zudem kann beim Leitapparat der erfindungsgemässen Pulverbeschichtungsanlage vorgesehen sein, dass wenigstens ein Teil der Schaufeln im Auslassbereich eine Fläche aufweist, die parallel zur Längsachse ausgerichtet ist.

Bei einer Weiterbildung der erfindungsgemässen Pulverbeschichtungsanlage verjüngt sich der Leitapparat auf seiner stromabwärtigen Seite. Wenn der Leitapparat senkrecht angeordnet ist, kann vorgesehen sein, dass er sich nach oben hin verjüngt. Hierdurch werden Strömungsabrisse am oberen Ende des Leitapparats vermieden.

Bei einer anderen Weiterbildung der erfindungsgemässen Pulverbeschichtungsanlage weist der Leitapparat eine Halterung auf, mit der er im Tauchrohr angeordnet werden kann. Dies ist insbesondere für das Nachrüsten eines Zyklons hilfreich. Die Halterung kann zum Beispiel oben, unten oder seitlich am Leitapparat vorgesehen sein.

Darüber hinaus kann bei der erfindungsgemässen Pulverbeschichtungsanlage vorgesehen sein, dass sich der Leitapparat auf seiner stromaufwärtigen Seite verjüngt. Wenn der Leitapparat senkrecht angeordnet ist, kann vorgesehen sein, dass er sich nach unten hin verjüngt. Die aufsteigende Luft prallt dadurch nicht auf die Unterseite des Leitapparats, sondern trifft in einem flachen Winkel auf ihn, so dass die Energieverluste weiter reduziert werden können.

Zudem ist bei der erfindungsgemässen Pulverbeschichtungsanlage im Einlasstrakt des Zyklons eine gefächerte Leitschaufel vorgesehen.

Bei der erfindungsgemässen Pulverbeschichtungsanlage ist es auch möglich, dass die gefächerte Leitschaufel tangential zum in den Zyklon eintretenden Pulver-Luftstrom angeordnet ist.

Bei einer Weiterbildung der erfindungsgemässen Pulverbeschichtungsanlage ist entlang der Längsseiten der Beschichtungskabine jeweils eine Restpulverrohrleitung angeordnet. Zudem ist ein Sammelrohr vorgesehen, das quer zu den Restpulverrohrleitungen verläuft und in das die Restpulverrohrleitungen münden. Das Sammelrohr weist einen Querschnitt auf, der sich über die Länge des Sammelrohrs im Wesentlichen kontinuierlich erweitert. Weil die beiden an den Längsseiten der Beschichtungskabine angeordneten Restpulverrohrleitungen nun jeweils die gleiche Luftmenge absaugen, muss man bei der Dimensionierung der aus der Kabine abzusaugenden Luftmenge nicht mehr von der Restpulverrohrleitung mit der geringeren Saugleistung ausgehen. Somit kann man die pro Zeiteinheit aus der Kabine abgesaugte Luftmenge reduzieren, was den Energieverbrauch der Anlage weiter reduziert.

Zudem wird eine Pulverbeschichtungsanlage zum Beschichten von Werkstücken mit Beschichtungspulver vorgeschlagen, die eine Beschichtungskabine und ein Zyklon und/oder ein Filter aufweist. Die Beschichtungskabine ist über eine Restpulverrohrleitung mit dem Zyklon oder dem Filter verbunden. Die Restpulverrohrleitung weist mindestens einen Krümmer auf, um den Pulver-Luftstrom in eine andere Richtung zu lenken. Der Krümmer umfasst eine kurze, gekrümmte Aussenwand und eine lange, gekrümmte Aussenwand, wobei die lange, gekrümmte Aussenwand eine Ausbuchtung aufweist.

Schliesslich kann bei der erfindungsgemässen Pulverbeschichtungsanlage vorgesehen sein, dass der Krümmer eine Innenkurve aufweist, die Teil der kurzen Aussenwand ist. Zudem weist der Krümmer eine Aussenkurve auf, die Teil der langen Aussenwand ist. Die lange Aussenwand weist einen geraden Abschnitt auf, an den sich die Aussenkurve tangential anschliesst.

### Kurze Beschreibung der Zeichnungen

Im Folgenden wird die Erfindung mit mehreren Ausführungsbeispielen anhand von mehreren Figuren weiter erläutert.
- Figur 1: zeigt eine mögliche Ausführungsform einer Pulverbeschichtungsanlage zum Beschichten von Werkstücken mit Beschichtungspulver in der Seitenansicht.
- Figur 2: zeigt die Pulverbeschichtungsanlage zum Beschichten von Werkstücken mit Beschichtungspulver in der Draufsicht.
- Figur 3: zeigt eine mögliche Ausführungsform eines Zyklons in einer dreidimensionalen Ansicht.
- Figuren 4a und 4b: zeigen den Zyklon im Längsschnitt beziehungsweise in der dreidimensionalen Ansicht im Schnitt.
- Figuren 5a, 5b und 5c: zeigen eine erste mögliche Ausführungsform eines in den Zyklon einbaubaren Leitapparats.
- Figuren 6a, 6b und 6c: zeigen eine zweite mögliche Ausführungsform des in den Zyklon einbaubaren Leitapparats.
- Figuren 7a, 7b und 7c: zeigen eine dritte mögliche Ausführungsform des in den Zyklon einbaubaren Leitapparats.
- Figuren 8a, 8b und 8c: zeigen eine vierte mögliche Ausführungsform des in den Zyklon einbaubaren Leitapparats.
- Figuren 9a, 9b und 9c: zeigen eine vierte mögliche Ausführungsform des in den Zyklon einbaubaren Leitapparats.
- Figuren 10a, 10b und 10c: zeigen eine mögliche Ausführungsform einer Rohrleitung für den Restpulverluftstrom mit einem Rohradapter in einer dreidimensionalen Ansicht und in zwei Seitenansichten.
- Figuren 11a, 11b und 11c: zeigen eine weitere mögliche Ausführungsform der Rohrleitung für den Restpulverluftstrom in einer dreidimensionalen Ansicht und in zwei Seitenansichten.
- Figur 12a: zeigt eine erste mögliche Ausführungsform eines Krümmers in der Seitenansicht, der in die Rohrleitung für den Restpulverluftstrom einbaubar ist.
- Figur 12b: zeigt eine zweite mögliche Ausführungsform des Krümmers in der Seitenansicht, der in die Rohrleitung für den Restpulverluftstrom einbaubar ist.
- Figuren 13a, 13b, 13c und 13d: zeigen eine mögliche Ausführungsform des Rohradapters in verschiedenen Ansichten.
- Figuren 14a, 14b, 14c, 14d und 14e: zeigen eine mögliche Ausführungsform eines Sammelrohrs für den Restpulverluftstrom in verschiedenen Ansichten.
- Figuren 15a und 15b: zeigen eine mögliche Ausführungsform eines Luftleitblechs in der dreidimensionalen Ansicht und in der Seitenansicht.

### Wege zur Ausführung der Erfindung

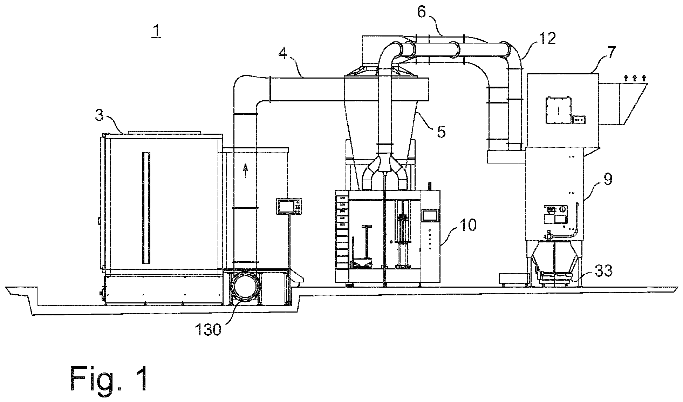

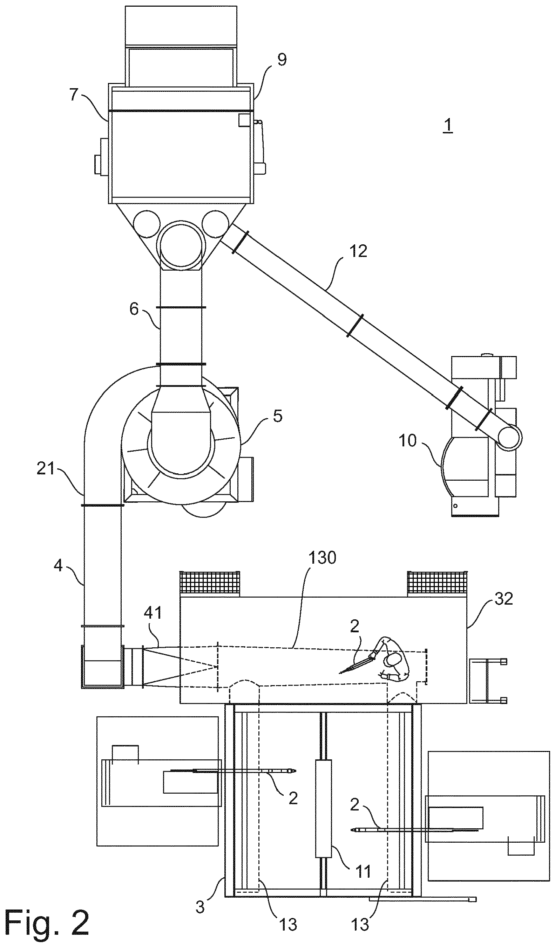

In Figur 1 ist eine mögliche Ausführungsform einer Pulverbeschichtungsanlage 1 zum Beschichten von Werkstücken 11 mit Beschichtungspulver in der Seitenansicht und in Figur 2 in der Draufsicht dargestellt. Die Pulverbeschichtungsanlage 1 umfasst eine Beschichtungskabine 3, durch die ein zu beschichtendes Werkstück 11 transportiert wird. Mittels seitlich in die Kabine 3 ragenden Sprühpistolen 2 kann das Werkstück 11 mit Beschichtungspulver besprüht werden. Die Sprühpistolen 2 können an einem Linearhubgerät befestigt sein, das dazu dient die Sprühpistolen 2 nach oben und unten zu bewegen, damit auch grössere Werkstücke besprüht werden können. Die Versorgung der Sprühpistolen 2 mit Beschichtungspulver erfolgt über ein Pulverzentrum 10. Das bei der Beschichtung anfallende Overspray wird zusammen mit der in der Kabine 3 befindlichen Luft als Pulver-Luftgemisch aus der Kabine 3 gesaugt und über eine Restpulverrohrleitung 4 einem Zyklon 5 zugeführt. Das Pulver-Luftgemisch in der Restpulverrohrleitung 4 wird auch als Restpulverluftstrom bezeichnet. Der Zyklon 5 ist als Monozyklon ausgebildet. Im Zyklon 5 werden die Pulverpartikel von der Luft getrennt und unten im Zyklon gesammelt. Das zurückgewonnene Pulver kann bei Bedarf wieder zur Beschichtung benutzt werden. Dazu kann der Pulverauslass 25 des Zyklons 5 über eine Pulverleitung für rezykliertes Pulver (in den Figuren nicht dargestellt) mit dem Pulverzentrum 10 verbunden sein. Die von den meisten Pulverpartikeln befreite Luft wird über eine Rohrleitung 6 einem Nachfilter 9 zugeführt. Der Nachfilter 9 kann mit Filterpatronen ausgestattet sein, die die restlichen in der Luft verbliebenen Pulverpartikel herausfiltern. Ein vorzugsweise elektrisch angetriebener Ventilator oder Gebläse 7 sorgt für den notwendigen Luftdurchsatz.

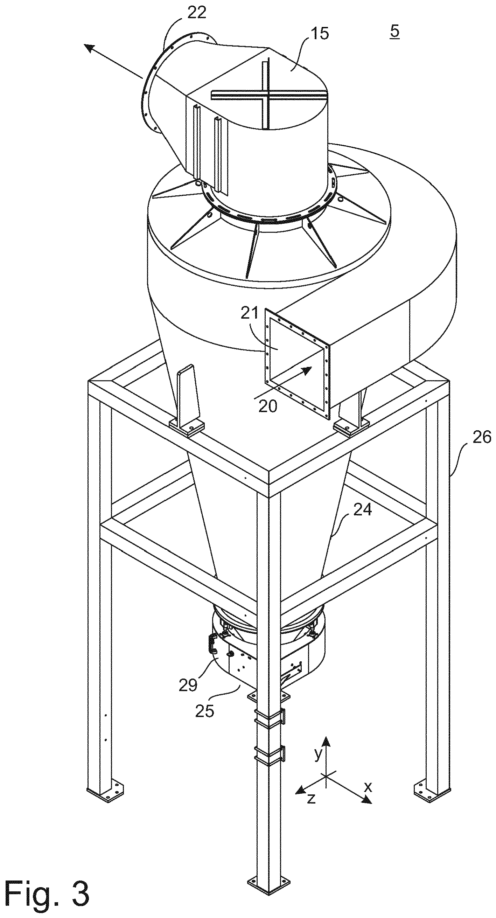

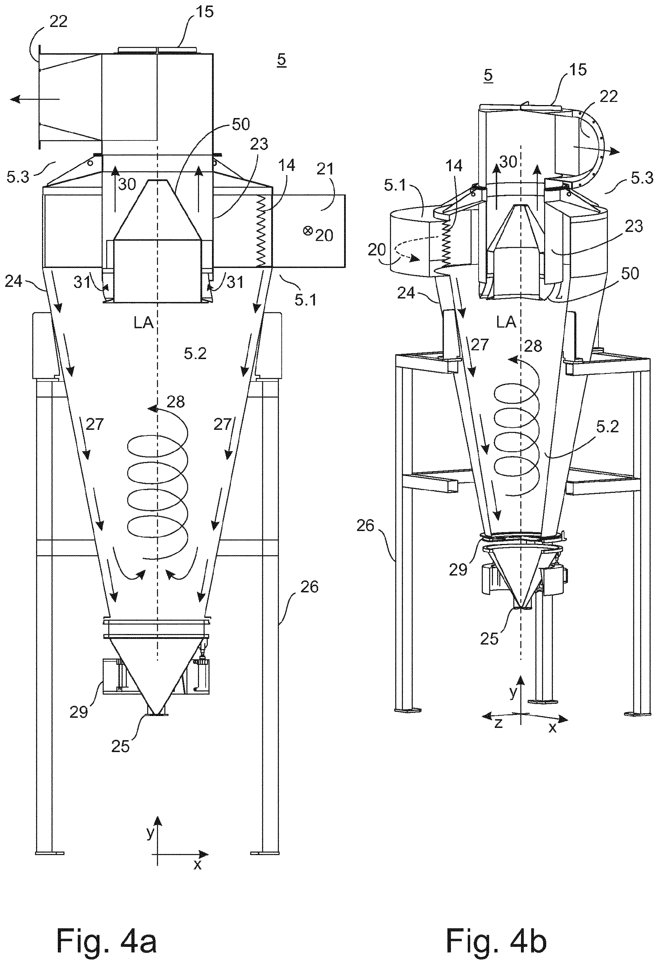

In Figur 3 ist eine mögliche Ausführungsform des Zyklons 5 in einer dreidimensionalen Ansicht dargestellt. Die Figuren 4a und 4b zeigen den Zyklon 5 im Längsschnitt beziehungsweise in der dreidimensionalen Ansicht im Schnitt. Das dem Zyklon 5 durch die Restpulverrohrleitung 4 zugeführte Pulver-Luftgemisch strömt am Einlass 21 tangential in den Einlasstrakt 5.1 des Zyklons 5, was in den Figuren 4a und 4b jeweils mit einem Pfeil schematisch dargestellt ist. Dabei strömt das Pulver-Luftgemisch 20 an einer Luftleitschaufel 14 vorbei und dann im Zyklon 5 spiralförmig nach unten in den Abscheidetrakt 5.2 des Zyklons 5. Die Pulverpartikel werden durch die bei der Rotation des Luftstroms entstehende Zentrifugalkraft nach aussen in Richtung zur Aussenwand 24 des Zyklons 5 gedrückt. Durch die Schwerkraft und den nach unten gerichteten Luftstrom werden die Pulverpartikel im Bereich der Aussenwand 24 nach unten in Richtung des Pulverauslasses 25 des Zyklons gefördert und dort gesammelt. Dies ist schematisch durch die Pfeile 27 dargestellt. Unten am Zyklon 5 kann sich ein Sieb 29 befinden. Das auf diese Weise zurückgewonnene und gesiebte Pulver kann über den Pulverauslass 25 des Zyklons entnommen werden. Die zum grössten Teil von den Pulverpartikeln befreite Luft wird über das im Auslasstrakt 5.3 des Zyklons 5 angeordnete Tauchrohr 23 und einen Leitapparat 50 abgesaugt und gelangt dann zum Auslass 22 des Zyklons.

Das Tauchrohr 23 kann beispielsweise eine Länge von 800 bis 1100 mm und einen Durchmesser von 480 bis 900 mm haben. Die Länge des Tauchrohrs 23 hängt unter anderem von der Höhe des Zyklons 5 ab. Durch eine Reihe von Versuchen hat man herausgefunden, dass es einen Zusammenhang zwischen dem Abscheidegrad des Tauchrohrs 23 und der Abscheidung in der Hauptströmung gibt. Mit zunehmender Länge des Tauchrohrs 23 steigt zwar der Abscheidegrad im Tauchrohr 23, die Abscheidung in der Hauptströmung wird dadurch jedoch negativ beeinflusst.

Das Tauchrohr 23 ist vorzugsweise so angeordnet, dass dessen Längsachse parallel zur Längsachse des Zyklons 5 verläuft. Zudem ist es in der Regel von Vorteil, wenn die Längsachse des Tauchrohrs 23 mit der Längsachse des Zyklons 5 zusammenfällt, so dass das Tauchrohr 23 im Zyklon 5 beziehungsweise im Auslasstrakt 5.3 des Zyklons 5 zentrisch angeordnet ist.

Der Leitapparat 50 ragt vorzugsweise unten aus dem Tauchrohr 23 mindestens 100 mm heraus. Dadurch hat der Luftwirbel 28 die Möglichkeit sich an die Schaufeln 51 anzulegen. So wird verhindert, dass der Luftwirbel 28 von der Sekundärströmung 31 negativ beeinflusst werden kann. Würde der Leitapparat 50 nicht aus dem Tauchrohr 23 herausragen, könnte die Sekundärströmung 31 den Strömungswinkel des Luftwirbels 28 so beeinflussen, dass Stossverluste entstehen. Die Stossverluste würden entstehen, wenn die Strömung nicht im Schaufelwinkel ε auf die Schaufel 51 trifft.

Der Leitapparat 50 ist zum grössten Teil oder ganz im Tauchrohr 23 angeordnet. Eine mögliche Einbaulage des Leitapparats 50 ist in den Figuren 4a und 4b dargestellt.

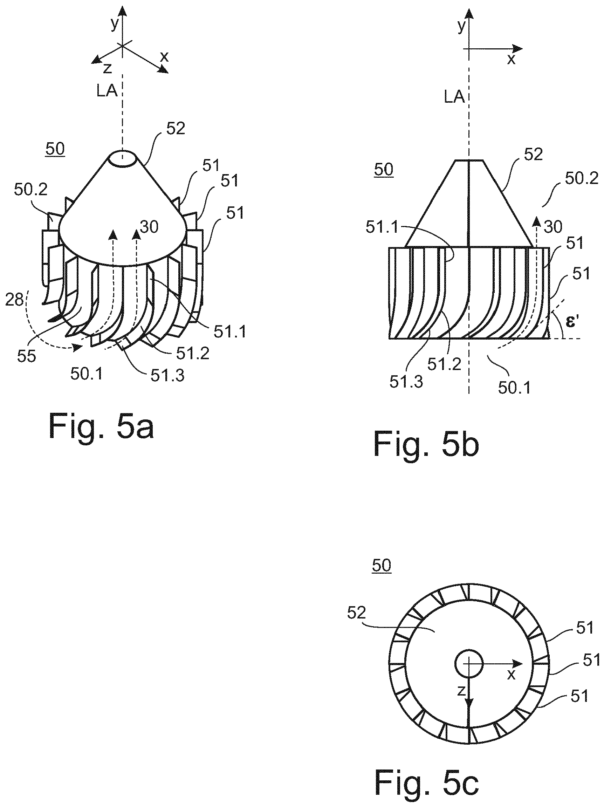

Die Figuren 5a, 5b und 5c zeigen eine erste mögliche Ausführungsform des in den Zyklon 5 einbaubaren Leitapparats 50. Der Leitapparat 50 ist vorteilhafter Weise rotationssymmetrisch aufgebaut und hat eine Längsachse LA. Er weist einen zylindrischen Kern 55 auf, an den sich oben ein Kegel oder ein Kegelstumpf 52 anschliesst. Auf der Unterseite kann der Kern 55 mit einer ebenen Fläche geschlossen sein. Dies ist nicht zwingend, aber von Vorteil, weil sich dann im Inneren des Kerns 55 kein Restpulver ablagern kann und der aufsteigende Luftstrom sich dort nicht verfangen kann. Der Verlauf des Luftstroms durch den Leitapparat entlang der Leitschaufeln 51 ist in Figur 5a durch die beiden gestrichelten Pfeile schematisch dargestellt.

Der Leitapparat 50 weist zudem eine Reihe von Leitschaufeln 51 auf, die hier auch kurzum als Schaufeln bezeichnet werden. Diese können auf der Aussenseite des Kerns 55 befestigt sein. Statt dessen ist es aber auch möglich, die Leitschaufeln 51 am Tauchrohr 23 zu befestigen. Ein Teil oder sämtliche Leitschaufeln 51 können auch sowohl am Kern 55 als auch am Tauchrohr 23 befestigt sein. Die Leitschaufeln 51 können zum Beispiel durch Schweissen befestigt werden.

Wenn der Leitapparat 50 in das Tauchrohr 23 hineingeschoben wird, ist es von Vorteil, wenn zwischen den Leitschaufeln 51 und dem Tauchrohr 23 keine oder möglichst geringe Luftspalte bestehen.

Der gesamte Leitapparat oder Teile davon können zum Beispiel aus Stahl, Aluminium oder leitfähigem Kunststoff hergestellt werden. Als Herstellungsverfahren sind beispielsweise Schweissen, Giessen oder Rapid-Manufacturing, wie Sintern oder 3D-Drucken, denkbar.

Die Leitschaufeln 51 sind vorzugsweise äquidistant zueinander angeordnet.

Im Folgenden wird die Form der Leitschaufeln 51 anhand einer Schaufel erläutert. Vorzugsweise haben alle Schaufeln 51 die gleiche Form. Die Leitschaufel 51 weist im unteren Bereich 51.3 eine ebene Fläche auf, die gegenüber der horizontalen Ebene leicht geneigt ist. Vorzugsweise schliesst sie mit der Horizontalen einen Winkel ε' zwischen 20° und 50° und noch besser zwischen 30° und 37° ein. Der Winkel ε' wird auch als Anströmwinkel bezeichnet. Auf die Längsachse LA des Leitapparats 50 bezogen, heisst das, dass die Leitschaufel 51 mit der Längsachse LA einen Winkel ε (ε = 90° - ε') zwischen 40° und 70° und noch besser zwischen 53° und 60° einschliesst. An diese schräge Fläche 51.3 schliesst sich im mittleren Bereich 51.2 eine Krümmung an. Im oberen Bereich 51.1 weist die Leitschaufel 51 eine ebene, senkrechte Fläche 51.1 auf.

Die gekrümmte Fläche 51.2 kann an ihrem unteren Ende tangential in die ebene Fläche 51.3 und/oder an ihrem oberen Ende tangential in die senkrechte Fläche 51.1 übergehen. Auf diese Weise werden an den Übergängen der Flächen 51.1 zu 51.2 und 51.2 zu 51.3 Kanten vermieden, so dass dort die Gefahr einer Pulverablagerung reduziert wird.

Bei einer weiteren Ausführungsform der Leitschaufel 51 fehlt die ebene Fläche im unteren Bereich 51.3. Statt dessen ist die Leitschaufel bereits am unteren Ende gekrümmt und geht dann oben in die ebene, senkrechte Fläche über 51.1.

Bei einer anderen Ausführungsform der Leitschaufel 51 fehlen beide ebenen Flächen. Statt dessen ist die Leitschaufel bereits am unteren Ende gekrümmt und die Krümmung erstreckt sich bis zum oberen Ende der Leitschaufel. Dort ist die Leitschaufel so gekrümmt, dass die Tangente der Krümmung im Wesentlichen vertikal ist.

Die Leitschaufeln 51 sind vorzugsweise an der Mantelfläche des Kerns 55 radial, das heisst geradlinig vom Zentrum des Kerns 55 ausgehend, angeordnet. Bei einer Ausführungsform des Leitapparats sind 16 Schaufeln vorgesehen. Vorzugsweise liegt die Zahl der Schaufeln zwischen 10 und 25.

Die Leitschaufeln 51 haben den Zweck, den aufsteigenden Luftwirbel 28 (siehe Figuren 4a und 4b) aufzulösen und weitestgehend in einen vertikal gerichteten Luftstrom 30 umzuformen. Der Luftstrom ist damit im Wesentlichen wirbelfrei, wenn er die Leitschaufeln 51 im Auslassbereich 50.2 passiert hat.

Wenn die Luft an den Schaufeln 51 vorbeiströmt, können im Auslassbereich 50.2 der Schaufeln 51 Ablösewirbel entstehen. Diese sind jedoch hier nicht von Belang.

Bevor der nach oben aufsteigende Luftwirbel 28 den Leitapparat 50 erreicht, besitzt er eine Bewegungsenergie, die sich aus einem vertikalen (translatorischen) Anteil und einem rotatorischen Anteil zusammensetzt. Mit Hilfe des Leitapparats 50 wird nun dieser rotatorische Anteil der Bewegungsenergie in eine zusätzliche translatorische Bewegungsenergie umgewandelt. Damit wird der rotatorische Anteil der Bewegungsenergie nicht vernichtet beziehungsweise in Wärmeenergie umgewandelt, sondern wie erwähnt, in eine zusätzliche translatorische Bewegungsenergie. Das hat unter anderem den Vorteil, dass der energetische Wirkungsgrad des Zyklons und damit auch der der gesamten Pulverbeschichtungsanlage steigt.

Grundsätzlich muss die Längsachse des Zyklons 5 nicht, wie in den Figuren 1 bis 4 gezeigt, vertikal ausgerichtet sein. Der Zyklon 5 kann auch schräg oder horizontal angeordnet sein, so dass dessen Längsachse schräg oder horizontal verläuft. In diesem Fall verlaufen auch die Längsachse des Tauchrohrs 23 und die des Leitapparats 50 entsprechend schräg oder horizontal.

Statt des Leitapparats 50 kann auch eine andere Ausführungsform des Leitapparats im Tauchrohr 23 angeordnet sein. Im Folgenden werden verschiedene, mögliche Ausführungsformen des Leitapparats beschrieben.

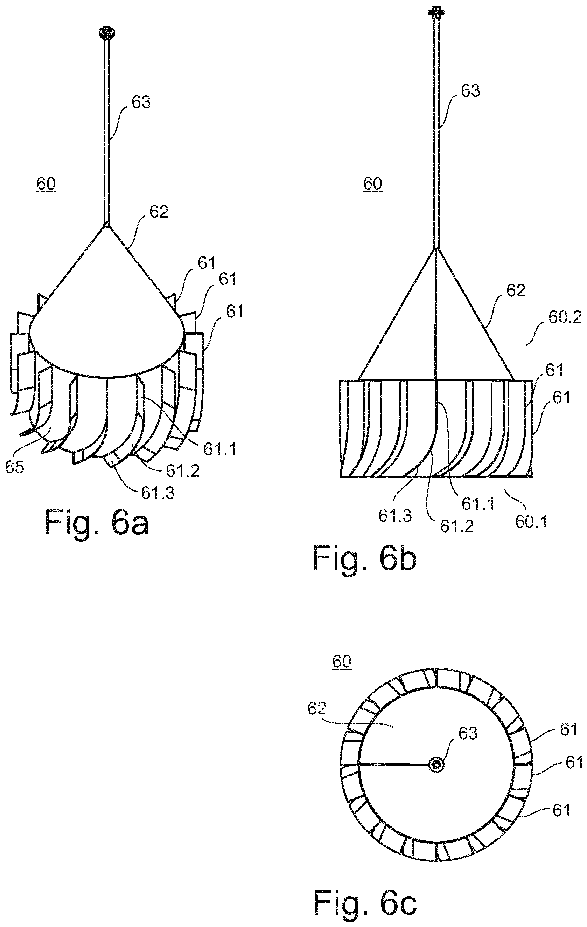

Die Figuren 6a, 6b und 6c zeigen eine zweite mögliche Ausführungsform eines in den Zyklon 5 einbaubaren Leitapparats 60 in einer dreidimensionalen Ansicht, in der Seitenansicht und in der Draufsicht. Der Leitapparat 60 unterscheidet sich vom Leitapparat 50 dadurch, dass er am oberen Ende des Kegels 62 eine Halterung 63 aufweist. Diese kann als Haltestange ausgebildet sein. An ihrem oberen Ende kann sie oben am Deckel 15 des Zyklons 5 befestigt werden. Diese Variante ist insbesondere für die Nachrüstung eines Zyklons von Vorteil. Der Leitapparat 60 wird lediglich in das Tauchrohr 23 hineingeschoben und mittels der Haltung 63 befestigt.

Statt den Leitapparat 60 in einer festen Höhe in das Tauchrohr 23 einzubauen, kann er auch in der Höhe einstellbar sein. Die Halterung 63 kann als Gewindestange mit Mutter ausgebildet sein, an der dann der Leitapparat 60 aufgehängt wird. Die Position des Leitapparates 60 im Tauchrohr 23 kann manuell über die Mutter eingestellt werden. Alternativ dazu kann die Halterung 63 ein Nut-Federsystem mit Arretierung aufweisen, um die Position des Leitapparates 60 einstellen zu können.

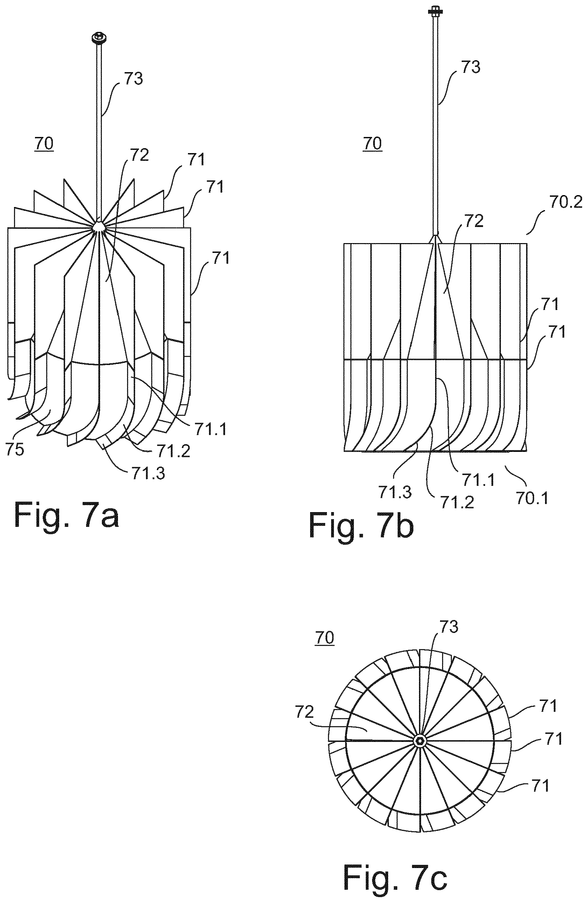

Die Figuren 7a, 7b und 7c zeigen eine dritte mögliche Ausführungsform eines in den Zyklon 5 einbaubaren Leitapparats 70 in einer dreidimensionalen Ansicht, in der Seitenansicht und in der Draufsicht. Der Leitapparat 70 weist ebenso wie der Leitapparat 60 eine Halterung 73 auf, damit er oben am Deckel 15 des Zyklons 5 befestigt werden kann. Im Unterschied zum Leitapparat 60 sind beim Leitapparat 70 die Leitschaufeln 71 bis zum oberen Ende des Kegels 72 geführt. Diese Ausführung hat den Vorteil, dass der Luftstrom trotz der geringen Bauhöhe des Leitapparats 70 eine längere Beruhigungsstrecke hat. Der Bereich der Beruhigungsstrecke wird somit um den Betrag der Höhe des Kegels verlängert. Der Wirkungsgrad des Leitapparates steigt dadurch.

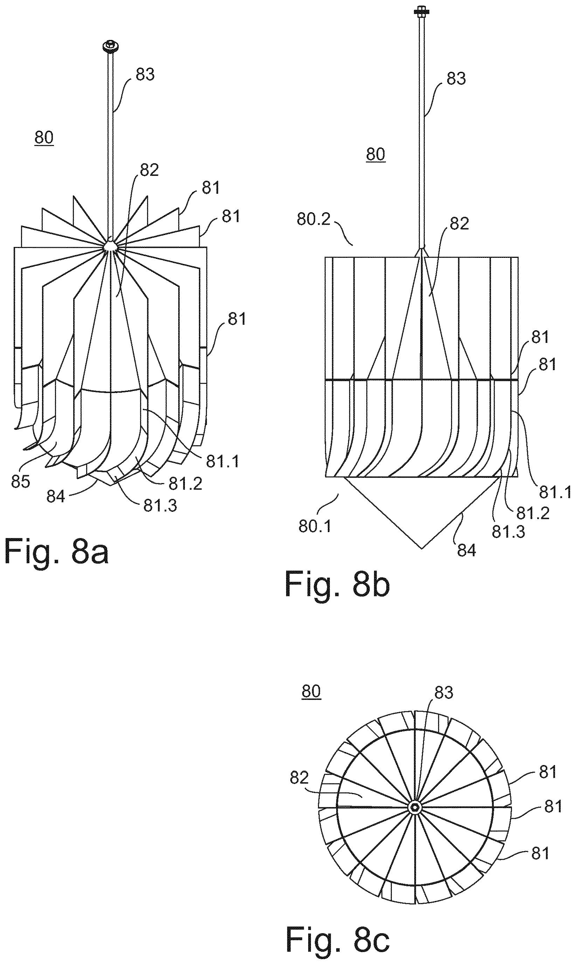

Die Figuren 8a, 8b und 8c zeigen eine vierte mögliche Ausführungsform eines in den Zyklon 5 einbaubaren Leitapparats 80 in einer dreidimensionalen Ansicht, in der Seitenansicht und in der Draufsicht. Der Leitapparat 80 weist gegenüber dem Leitapparat 70 auf der Unterseite zusätzlich einen Kegel 84 auf. Bei dieser Ausführung wird die Strömung gezielt auf die Bahn der Schaufeln 81 gelenkt. Dadurch werden sowohl schmälere als auch breitere Innenwirbel auf die Schaufeln 81 geführt. Wäre der Leitapparat auf der Unterseite flach, würden Verluste durch den Aufprall der Strömung auf die flache Unterseite entstehen. Durch den auf der Unterseite angeordneten Kegel oder Kegelstumpf können solche Prallverluste minimiert werden.

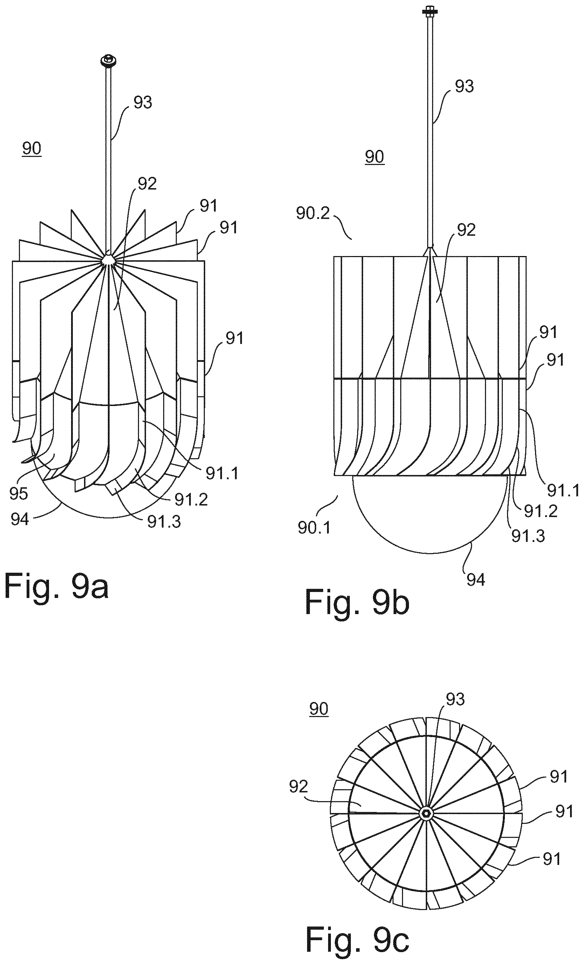

Die Figuren 9a, 9b und 9c zeigen eine vierte mögliche Ausführungsform eines in den Zyklon 5 einbaubaren Leitapparats 90 in einer dreidimensionalen Ansicht, in der Seitenansicht und in der Draufsicht. Der Leitapparat 90 weist gegenüber dem Leitapparat 80 auf der Unterseite statt des Kegels eine Schale 94 auf. Die Schale 94 hat den selben Zweck wie der Kegel 84 beziehungsweise ein Kegelstumpf. Die Krümmung der Schale 94 kann beispielsweise halbkugelförmig sein.

Die einzelnen Komponenten eines Leitapparates können auch bei einem der anderen Leitapparate eingesetzt werden. So kann zum Beispiel der Kegel 84 des Leitapparats 80 auch auf der Unterseite des Leitapparats 50 verwendet werden. Die Komponenten der Leitapparate sind beliebig miteinander kombinierbar.

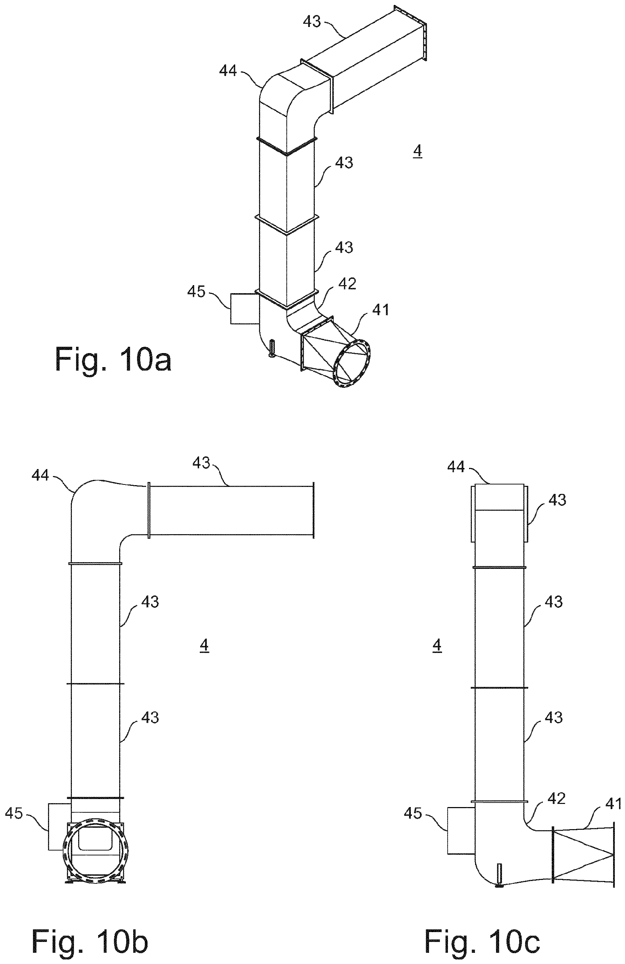

Die Figuren 10a, 10b und 10c zeigen eine mögliche Ausführungsform eines Abschnittes der Rohrleitung 4 für das Restpulver, das aus der Kabine 3 abgesaugt wird. Die Rohrleitung 4 wird hier auch als Restpulverrohrleitung bezeichnet. Eingangsseitig weist die Rohrleitung 4 einen runden Querschnitt und ausgangsseitig einen viereckigen Querschnitt auf.

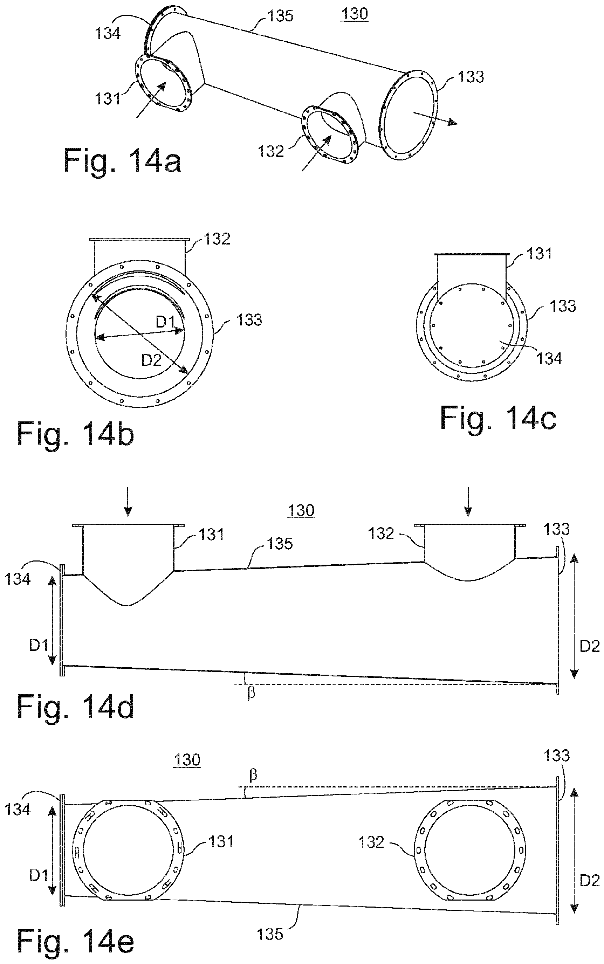

Die Rohrleitung 4 umfasst einen Rohradapter 41, der dazu dient ein Rohr mit einem runden Querschnitt, das beispielsweise das Sammelrohr 130 gemäss Figuren 14a bis e sein kann, mit einem Rohr mit einem viereckigen Querschnitt zu verbinden. An den Rohradapter 41 schliesst sich ein Krümmer 42 an. Der Krümmer 42 ist ein Rohr, das durch seine gekrümmte Form eine Richtungsänderung des Pulver-Luftstroms bewirkt. Ausgangsseitig ist der Krümmer 42 über ein erstes und ein zweites gerades Rohrstück 43 mit einem zweiten Krümmer 44 verbunden. Dies wiederum mündet in ein drittes gerades Rohrstück 43. Der Krümmer 44 und der Krümmer 42 können baugleich sein. Dies ist aber nicht zwingend notwendig.

Der Krümmer 42 kann eine Wartungstür 45 aufweisen. Statt die Wartungstür 45 in den Krümmer zu integrieren, kann die Wartungstür 45 auch in der Rohrleitung 43 vorgesehen sein. Mittels der Wartungstür 45 kann man nach einem Farbwechsel das Innere der Rohrleitung auf Verschmutzung hin prüfen und die Rohrleitung gegebenenfalls reinigen. Die Wartungstür ist in den Figuren 10a bis 11c offen dargestellt. Während des Beschichtungsbetriebs ist sie geschlossen.

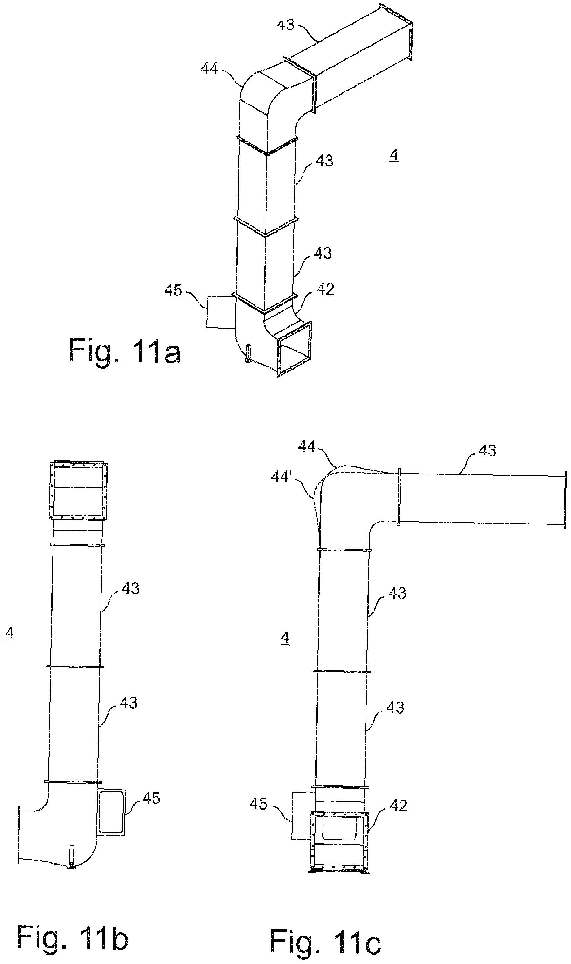

Die soeben beschriebenen Bauteile Rohradapter 41, Krümmer 42 und 44 und Rohrstücke 43 können serienmässig hergestellt sein und Standardmasse aufweisen. Sie können auf Lager produziert werden und als Standardbauteile dienen. Mit diesen können dann frei wählbare Rohrverläufe gebildet werden. Der in den Figuren 10a, 10b und 10c dargestellte Rohrverlauf ist lediglich ein Beispiel dafür. Bei Bedarf können beliebig viele solcher Bauteile miteinander kombiniert werden. Die Figuren 11a, 11b und 11c zeigen eine mögliche Ausführungsform der Rohrleitung 4 ohne den Rohradapter 41. Wenn der Krümmer 44 und die Rohrleitung 43 einen quadratischen Querschnitt aufweisen, kann der Krümmer 44 in 90°-Schritten auf die Rohrleitung 43 montiert und so die Richtung des weiteren Verlaufes der Rohrleitung 4 in 90°-Schritten eingestellt werden. Es sind aber auch beliebige Winkel für den weiteren Verlauf der Rohrleitung 4 möglich. Dazu werden zum Beispiel zwei Krümmer oder zwei Rohrleitungen 43 jeweils mit einem Rohradapter 41 verbunden und so angeordnet, dass die runden Querschnitte der Rohradapter 41 aufeinander liegen. Nun können auch beliebige Winkel für die Weiterführung der Rohrleitungen eingestellt werden.

Die Bauteile 41 - 44 der Rohrleitung 4 können aus Blech hergestellt sein.

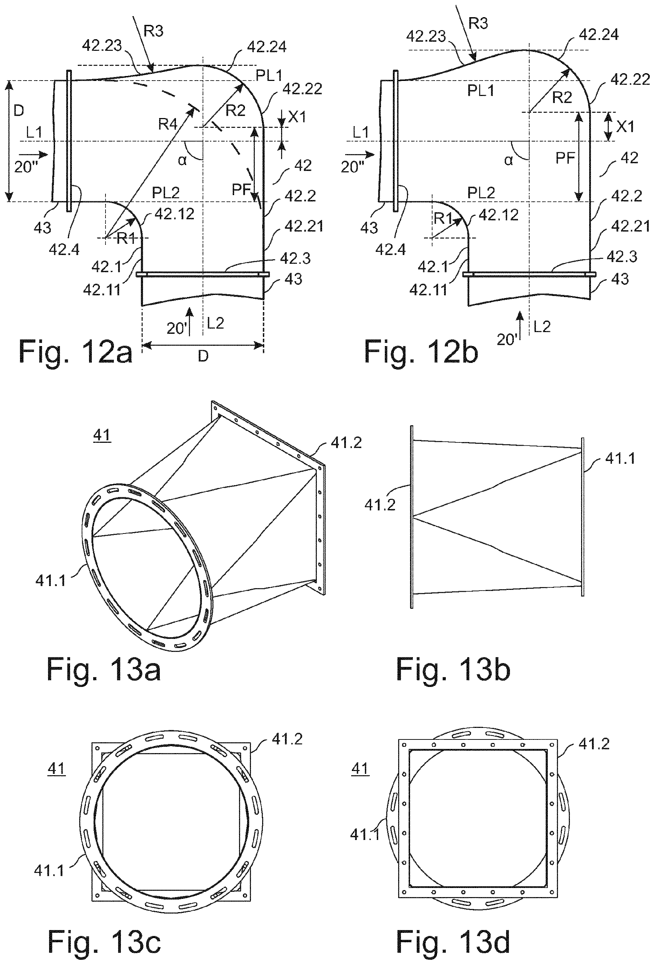

Eine erste mögliche Ausführungsform des Krümmers 42 ist in Figur 12a und eine zweite mögliche Ausführungsform des Krümmers 42 ist in Figur 12b in der Seitenansicht gezeigt. Die dort dargestellten Krümmer 42 weisen, bezogen auf die beiden Bezugsachsen L1 und L2, einen Krümmungswinkel α von 90° auf. Der Pulver-Luftstrom tritt also um 90° abgelenkt aus dem Krümmer 42 aus. Der Krümmer 42 kann aber auch mit jedem anderen Krümmungswinkel α hergestellt werden. Der Krümmer 42 kann ein Rohr aus gebogenem Blech sein und einen runden oder viereckigen Rohrquerschnitt aufweisen. In diesem Fall bildet die Wand 42.2 die der Wand 42.1 gegenüberliegende Wand. Im Bereich 42.21 verläuft die Wand 42.2 gerade und weist anschliessend im Bereich 42.22 eine Krümmung auf, die im Folgenden auch als Aussenkurve bezeichnet wird. Die Wand 42.1 hat eine grössere Krümmung als die Wand 42.2. Die Krümmung 42.12 wird im Folgenden auch als Innenkurve bezeichnet.

Die Wand 42.1 ist kürzer als die Wand 42.2 und wird daher auch als kurze Aussenwand 42.1 bezeichnet, wohingegen die Wand 42.2 auch als lange Aussenwand 42.2 des Krümmers 42 bezeichnet wird.

Die Krümmung der Wand 42.1 kann einen über die gesamte Krümmung hinweg konstanten Radius R1 aufweisen, was aber nicht zwingend ist. Grundsätzlich kann die Wand 42.1 mehr oder weniger beliebig konkav gekrümmt sein. Vorteilhafter Weise ist die Krümmung im Bereich 42.12 jedoch nicht so gross, dass sie - strömungstechnisch gesehen - eine Ecke bildet, weil sich dort sonst Pulver ablagern könnte.

Unter Krümmung wird auch eine durch ein Polygon gebildete Form verstanden, die im Wesentlichen dem gewünschten gekrümmten Verlauf entspricht. So kann die Krümmung sowohl durch einen Kreisbogen als auch durch ein Polygon erzeugt werden. Ein Viertelkreis kann zum Beispiel durchaus auch durch ein Polygon mit 4 bis 8 Ecken gebildet werden. Grundsätzlich gilt obiges für sämtliche im Krümmer vorhandenen Krümmungen. Die Anzahl der Ecken des Polygons sollte so gross gewählt werden, dass bei dem Polygon keine allzu spitzen Ecken beziehungsweise scharfen Kanten entstehen, weil es dort sonst zu einem Strömungsabriss kommen und sich dort Pulver ablagern könnte. Dies gilt sinngemäss auch für die Innenkurve und die Aussenkurve des Krümmers, welche zum Beispiel durch Kreisbögen, Ellipsenabschnitte, Bogensegmente oder Polygone gebildet werden können.

Die Krümmung der gegenüberliegenden Wand 42.2 kann in einem ersten Bereich 42.22 der Krümmung einen Radius R2 und in einem zweiten Bereich 42.23 der Krümmung einen Radius R3 aufweisen. In den beiden Bereichen 42.22 und 42.23 sind die beiden Krümmungen gegenläufig zueinander. Damit ist der Verlauf der Krümmung in der Wand 42.2 zuerst konkav und anschliessend konvex. Es ist aber auch möglich die Krümmung in der Wand 42.2 so zu gestalten, dass sie zuerst konvex und anschliessend konkav ist. Die gesamte Krümmung der Wand 42.2 ist so ausgebildet, dass sich eine Ausbuchtung 42.24 in der Wand 42.2 ergibt. Durch die Ausbuchtung 42.24 wird der Rohrquerschnitt vergrössert. Dadurch wird erreicht, dass das durch den Krümmer 42 strömende Pulver sich nicht an der Wand 42.2 ablagern oder gar dort ansintern kann. In den Figuren 12a und 12b liegt die Ausbuchtung 42.24 oberhalb der Projektionslinie PL1, wobei die Projektionslinie PL1 die gedachte geradlinige Verlängerung der Aussenwand 42.2 des Krümmers unmittelbar bei der Öffnung 42.4 ist. Die Projektionslinie PL2 ist die gedachte geradlinige Verlängerung der Aussenwand 42.1 des Krümmers unmittelbar bei der Öffnung 42.4.

Wenn der Radius R3 der konkaven Krümmung im Bereich 42.23 so gross gewählt wird, dass er sich einer Geraden annähert, dann kann der Bereich 42.23 auch geradlinig ausgebildet werden. In diesem Fall wird die Wand im Bereich 42.23 durch eine schräge Fläche gebildet, die tangential in die konvexe Krümmung im Bereich 42.22 übergeht.

Das Pulver-Luftgemisch kann durch die Öffnung 42.3 in den Krümmer 42 strömen und durch die Öffnung 42.4 wieder aus dem Krümmer austreten. In diesem Fall gibt der Pfeil 20' die Strömungsrichtung des Pulver-Luftgemischs an. Der Krümmer 42 kann aber auch in entgegengesetzter Richtung vom Pulver-Luftgemisch durchströmt werden. In diesem Fall gibt der Pfeil 20" die Strömungsrichtung des Pulver-Luftgemischs an. In Figur 11c ist der Krümmer 44 in einer ersten Einbaulage gezeigt, sodass sich die Ausbuchtung auf der Oberseite des Krümmers befindet.

Durch die gestrichelte Linie und das Bezugszeichen 44' ist eine zweite mögliche Einbaulage des Krümmers 44 angedeutet, wobei sich hier die Ausbuchtung des Krümmers auf der Seite befindet. Damit kann ein und derselbe Krümmer auf zwei verschiedene Arten in die Restpulverrohrleitung 4 eingebaut werden.

Strömt der Pulver-Luftstrom gemäss dem Pfeil 20' durch die Öffnung 42.3 in den Krümmer 42, treffen die Pulverpartikel im Bereich der Ausbuchtung 42.24 auf die Wand 42.2 des Krümmers. Die Ausbuchtung 42.24 dient damit als Prallfläche für die Pulverpartikel. Die Pulverpartikel werden dort reibungsfrei abgebremst. Da dabei keine nennenswerte Reibung entsteht, wird verhindert, dass die Partikel dort ansintern können. Durch den permanenten Luftstrom werden die Partikel anschliessend von dort zur Auslassöffnung des Krümmers transportiert. Die Prallfläche ist vorzugsweise zwischen D/2 und D breit, wobei D die Breite der Öffnung 42.3 des Krümmers 42 ist.

Wie erwähnt, kann der Krümmer 42 aber auch in entgegengesetzter Richtung durchströmt werden. Der Pulver-Luftstrom strömt dann gemäss dem Pfeil 20" durch die Öffnung 42.4 in den Krümmer 42. Ein Teil der Pulverpartikel trifft im Bereich PF senkrecht auf die Wand 42.2 des Krümmers, die damit als Prallfläche für diese Pulverpartikel dient. Die Pulverpartikel werden dort reibungsfrei abgebremst und dadurch verhindert, dass sie dort ansintern können. Durch den permanenten Luftstrom werden die Partikel anschliessend von dort zur Auslassöffnung des Krümmers transportiert, die in diesem Fall die Öffnung 42.3 ist. Als Prallfläche PF dient jene Fläche des Krümmers 42, auf die die Pulverpartikel senkrecht oder annähernd senkrecht auftreffen. Die Prallfläche PF ist vorzugsweise zwischen D/2 und D breit, wobei D die Breite der Öffnung 42.4 des Krümmers 42 ist.

Strömt das Pulver-Luftgemisch in Richtung 20" in den Krümmer 42, trifft ein grösserer Anteil des Pulvers auf eine senkrecht zur Strömungsrichtung ausgerichtete Fläche der Aussenwand 42.2 als dies der Fall ist, wenn das Pulver-Luftgemisch in Richtung 20' in den Krümmer 42 strömt. Somit ist die Prallfläche PF bei der Durchströmung in Richtung 20" grösser als in Richtung 20'. Damit ist die Gefahr der Ansinterung bei der Strömung in Richtung 20" noch kleiner als bei der Strömung in Richtung 20'.

Die Druckverluste sind, unabhängig davon, ob der Luftstrom aus der Richtung 20' oder 20" kommend den Krümmer 42 durchströmt, in beiden Fällen ähnlich gross.

Bei bisher bekannten Krümmern hat die lange Aussenwand 42.2 einen Radius R4 und verläuft so wie sie in Figur 12a gestrichelt eingezeichnet ist. Es ist zu erkennen, dass bei dem bisher bekannten Krümmer so gut wie keine oder nur eine relativ kleine Prallfläche für die Pulverpartikel vorhanden ist. Der grösste Teil der Pulverpartikel trifft in einem relativ flachen Winkel auf die lange Aussenwand. Dabei werden die Partikel durch Reibung erwärmt, so dass sie im Laufe der Zeit an der langen Aussenwand haften bleiben oder dort ansintern können.

Der in Figur 12b gezeigte Krümmer 42 unterscheidet sich vom Krümmer gemäss Figur 12a durch die Lage und den Verlauf der Aussenkurve. Die Aussenkurve 42.22 und 42.24 ist weiter gegenüber der Mittellinie oder Bezugsachse L1 nach aussen versetzt als es bei der Aussenkurve gemäss Figur 12a der Fall ist. Der Versatz X1 des Mittelpunkts der Krümmung 42.22 gegenüber der Mittellinie L1 ist damit beim Krümmer gemäss Figur 12b grösser als bei Figur 12a. Zudem ist die Aussenkurve im Bereich 42.23 anders geformt.

Figur 13a, 13b, 13c und 13d zeigt eine mögliche Ausführungsform des Rohradapters 41 in einer dreidimensionalen Ansicht, der Seitenansicht, der Ansicht von vorn und von hinten. Der Rohradapter 41 weist eine runde Öffnung 41.1 und eine viereckige Öffnung 41.2 auf. Über entsprechende Flansche kann der Rohradapter 41 mit runden oder viereckigen Rohren verbunden werden.

Die Figuren 14a, 14b, 14c, 14d und 14e zeigen eine mögliche Ausführungsform des Sammelrohrs 130 in verschiedenen Ansichten. Bei einer Kabine mit zwei in Längsrichtung zur Kabine verlaufenden Absaugrohren für Overspray münden die beiden Absaugrohre in die beiden Anschlussstutzen 131 beziehungsweise 132 des Sammelrohrs 130. Der Auslass 133 des Sammelrohrs 130 wiederum kann auf den Rohradapter 41 geführt oder direkt an die Restpulverleitung 4 angeschlossen werden, wenn deren Rohrquerschnitte gleich sind. Das dem Auslass 133 gegenüberliegende Ende des Sammelrohrs 130 ist mit einem Revisionsdeckel 134 verschlossen. Bei Bedarf kann der Revisionsdeckel 134 abgenommen und das Innere des Sammelrohrs 130 gereinigt werden. Das Sammelrohr hat im Bereich des Revisionsdeckels 134 einen ersten Durchmesser D1 und beim Auslass 133 einen zweiten Durchmesser D2, wobei der Durchmesser D1 kleiner als der Durchmesser D2 ist. Damit nimmt der Querschnitt des Sammelrohrs 130 zum Auslass 133 hin zu und vorzugsweise nimmt der Querschnitt des Sammelrohrs 130 zum Auslass 133 hin konstant zu. Auf diese Weise wird erreicht, dass die Strömungsgeschwindigkeiten der Restpulver-Luftströme in den beiden Absaugrohren der Kabine gleich gross oder beinahe gleich gross sind. Dies hat den Vorteil, dass auf der einen Längsseite und der anderen Längsseite der Kabine in etwa die gleichen Luftmengen pro Zeiteinheit abgesaugt werden. Der Winkel β kennzeichnet die Änderung des Durchmessers des Sammelrohrs 130 und hängt unter anderem von der Kabinenbreite ab. Je breiter die Kabine ist, desto kleiner sollte der Winkel gewählt werden. Der Winkel β liegt vorzugsweise im Bereich von 1° bis 4°. Für Kabinen mit einer Breite von rund 2,5m liegt der Winkel β im Bereich von 1° bis 3° und noch besser im Bereich von 2° bis 3°.

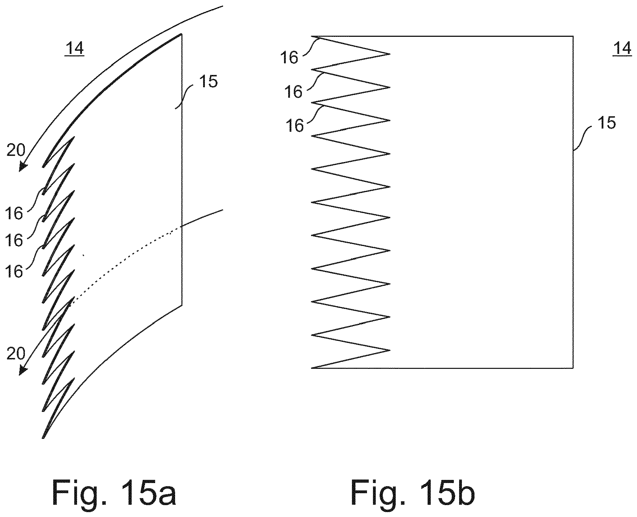

In Figur 15a ist das Leitblech 15 in einer dreidimensionalen Ansicht und in Figur 15b in der Seitenansicht dargestellt.

Das gefächerte Ende 16 der Leitschaufel 14 befindet sich auf der stromabwärtigen Seite der Leitschaufel. Der Vorteil ist, dass dadurch keine oder fast keine Ablagerungen an diesem Übergang im Zyklon entstehen können, weil die Ablösefläche auf ein Minimum reduziert wird.

Die vorhergehende Beschreibung der Ausführungsbeispiele gemäss der vorliegenden Erfindung dient nur zu illustrativen Zwecken. Im Rahmen der Erfindung sind verschiedene Änderungen und Modifikationen möglich. So kann beispielsweise der in den Figuren 3 und 4 gezeigte Zyklon 5 auch in eine andere als in den Figuren 1 und 2 gezeigte Pulverbeschichtungsanlage eingebaut werden. Die einzelnen Komponenten können auch auf eine andere als in den Figuren gezeigte Weise miteinander kombiniert werden. Es müssen auch nicht alle Schaufeln 51 gleich ausgebildet sein. So kann der Leitapparat auch mit verschieden ausgebildeten Schaufeln 51 ausgestattet sein. Die Schaufeln 51 können zum Beispiel im Einlassbereich unterschiedliche Anströmwinkel ε aufweisen.

Die Leitschaufeln 51 können im Auslassbereich 51.1 auch Zacken aufweisen oder gefächert sein. Der Auslassbereich 51.1 kann so ähnlich ausgebildet sein wie dies die gefächerte Enden 16 der Leitschaufel 14 sind.

Bei der Pulverbeschichtungsanlage zum Beschichten von Werkstücken mit Beschichtungspulver können eine Beschichtungskabine 3, ein Zyklon 5 und ein Filter 9 vorgesehen sein, wobei die Beschichtungskabine 3 über eine Restpulverrohrleitung 4 mit dem Zyklon 5 verbunden ist. Es ist aber auch möglich, dass die Beschichtungskabine 3 über die Restpulverrohrleitung 4 mit dem Filter 9 verbunden ist.

### Bezugszeichenliste

- 1: Pulverbeschichtungsanlage
- 2: Sprühpistolen
- 3: Beschichtungskabine
- 4: Restpulverleitung
- 5: Zyklon
- 5.1: Einlasstrakt
- 5.2: Abscheidetrakt
- 5.3: Auslasstrakt
- 6: Rohrleitung
- 7: Ventilator
- 9: Nachfilter
- 10: Pulverzentrum
- 11: Werkstück
- 12: Rohrleitung
- 13: Absaugrohr
- 14: Leitschaufel
- 15: Deckel des Zyklons
- 16: gefächerte Enden
- 20: Pulver-Luftgemisch oder auch Pulver-Luftstrom
- 21: Einlass
- 22: Auslass
- 23: Tauchrohr
- 24: Aussenwand des Zyklon
- 25: Pulverauslass
- 26: Tragkonstruktion
- 27: Transportrichtung des Pulvers
- 28: Luftwirbel
- 29: Sieb
- 30: vertikaler bzw. im wesentlichen wirbelfreier Luftstrom
- 31: Sekundärströmung
- 32: Handbeschichterstand
- 33: Abfallbehälter
- 41: Rohradapter
- 41.1: runder Querschnitt
- 41.2: viereckiger Querschnitt
- 42: Krümmer
- 42.1: Wand des Krümmers
- 42.11: Bereich der Wand 42.1
- 42.12: Bereich der Wand 42.1
- 42.2: Wand des Krümmers
- 42.21: Bereich der Wand 42.2
- 42.22: Bereich der Wand 42.2
- 42.23: Bereich der Wand 42.2
- 42.24: Ausbuchtung
- 43: gerades Rohr
- 44: Krümmer
- 45: Wartungstür
- 50: Leitapparat
- 50.1: Einlassbereich
- 50.2: Auslassbereich
- 51: Schaufel
- 51.1: geradliniger Bereich
- 51.2: Krümmung
- 51.3: geradliniger Bereich
- 52: Kegel bzw. Kegelstumpf
- 55: zylindrischer Kern
- 60: Leitapparat
- 60.1: Einlassbereich
- 60.2: Auslassbereich
- 61: Schaufel
- 61.1: geradliniger Bereich
- 61.2: Krümmung
- 61.3: geradliniger Bereich
- 62: Kegel
- 63: Halterung
- 65: zylindrischer Kern
- 70: Leitapparat
- 70.1: Einlassbereich
- 70.2: Auslassbereich
- 71: Schaufel
- 71.1: geradliniger Bereich
- 71.2: Krümmung
- 71.3: geradliniger Bereich
- 72: Kegel
- 73: Halterung
- 75: zylindrischer Kern
- 80: Leitapparat
- 80.1: Einlassbereich
- 80.2: Auslassbereich
- 81: Schaufel
- 81.1: geradliniger Bereich
- 81.2: Krümmung
- 81.3: geradliniger Bereich
- 82: Kegel
- 83: Halterung
- 84: Kegel
- 85: zylindrischer Kern
- 90: Leitapparat
- 90.1: Einlassbereich
- 90.2: Auslassbereich
- 91: Schaufel
- 91.1: geradliniger Bereich
- 91.2: Krümmung
- 91.3: geradliniger Bereich
- 92: Kegel
- 93: Halterung
- 94: Schale
- 95: zylindrischer Kern
- 130: Sammelrohr
- 131: Einlass
- 132: Einlass
- 133: Auslass
- 134: Revisionsdeckel
- 135: Sammelrohr
- D1: Durchmesser
- D2: Durchmesser
- D3: Durchmesser
- X1: Abstand
- R1: Radius
- R2: Radius
- R3: Radius
- R4: Radius
- L1: Bezugsachse
- L2: Bezugsachse
- LA: Längsachse des Leitapparats
- PL1: Projektionslinie 1
- PL2: Projektionslinie 2
- PF: Prallfläche
- α: Krümmungswinkel
- β: Winkel
- ε: Winkel im Einlassbereich der Schaufel

## Patentansprüche

1. Pulverbeschichtungsanlage zum Beschichten von Werkstücken mit Beschichtungspulver,
- bei der eine Beschichtungskabine (3) und ein Zyklon (5) vorgesehen sind,
- bei der die Beschichtungskabine (3) über eine Restpulverrohrleitung (4) mit dem Zyklon (5) verbunden ist,
- bei der im Auslasstrakt (5.3) des Zyklons (5) ein Tauchrohr (23) vorgesehen ist, in dem ein Leitapparat (50; 60; 70; 80; 90) angeordnet ist,
- bei der der Leitapparat (50; 60; 70; 80; 90) mehrere Schaufeln (51) aufweist, die derart ausgebildet sind, dass der auf die Schaufeln (51) auftreffende Luftwirbel (28) wenigstens zum Teil in einen wirbelfreien Luftstrom (30) umlenkbar ist, und
- bei der im Einlasstrakt (5.1) des Zyklons (5) eine gefächerte Leitschaufel (14) vorgesehen ist.

2. Pulverbeschichtungsanlage nach Patentanspruch 1,
bei der die Schaufeln (51) radial zur Längsachse (LA) des Leitapparats (50; 60; 70;80;90) angeordnet sind.

3. Pulverbeschichtungsanlage nach Patentanspruch 1 oder 2,
bei der die Schaufeln (51) im Einlassbereich (50.1) gekrümmt sind.

4. Pulverbeschichtungsanlage nach einem der vorigen Patentansprüche,
bei der wenigstens ein Teil der Schaufeln (51) im Einlassbereich (50.1) mit der Längsachse (LA) des Leitapparats (50) jeweils einen Winkel (ε) zwischen 40° und 70° einschliessen.

5. Pulverbeschichtungsanlage nach einem der vorigen Patentansprüche,
bei der die Schaufeln (51) im Auslassbereich (50.2) geradlinig ausgebildet sind.

6. Pulverbeschichtungsanlage nach einem der vorigen Patentansprüche,
bei der wenigstens ein Teil der Schaufeln (51) im Auslassbereich (50.2) eine Fläche (51.1) aufweist, die parallel zur Längsachse (LA) ausgerichtet ist.

7. Pulverbeschichtungsanlage nach einem der vorigen Patentansprüche,
bei der sich der Leitapparat (50; 60; 70; 80; 90) auf seiner stromabwärtigen Seite (50.2) verjüngt.

8. Pulverbeschichtungsanlage nach einem der vorigen Patentansprüche,
bei der der Leitapparat (50; 60; 70; 80; 90) eine Halterung (53) aufweist, mit der er im Tauchrohr (23) anordenbar ist.

9. Pulverbeschichtungsanlage nach einem der vorigen Patentansprüche,
bei der sich der Leitapparat (50; 60; 70; 80; 90) auf seiner stromaufwärtigen Seite (50.2) verjüngt.

10. Pulverbeschichtungsanlage nach einem der Patentansprüche 1 bis 9,
bei der die gefächerte Leitschaufel (14) tangential zum in den Zyklon (5) eintretenden Pulver-Luftstrom (20) angeordnet ist.

11. Pulverbeschichtungsanlage nach einem der vorigen Patentansprüche,
- bei der entlang der Längsseiten der Beschichtungskabine (3) jeweils eine Restpulverrohrleitung (13) angeordnet ist,
- bei der ein Sammelrohr (130) vorgesehen ist, das quer zu den Restpulverrohrleitungen (13) verläuft und in das die Restpulverrohrleitungen (13) münden,
- bei der das Sammelrohr (130) einen Querschnitt aufweist, der sich über die Länge des Sammelrohrs im Wesentlichen kontinuierlich erweitert.

12. Pulverbeschichtungsanlage nach einem der vorigen Patentansprüche,
- bei der die Restpulverrohrleitung (4) mindestens einen Krümmer (42; 44) aufweist, um den Pulver-Luftstrom (20'; 20") in eine andere Richtung zu lenken,
- bei der der Krümmer (42) eine kurze, gekrümmte Aussenwand (42.1) und eine lange, gekrümmte Aussenwand (42.2) aufweist,
- bei der die lange, gekrümmte Aussenwand (42.2) eine Ausbuchtung (42.24) aufweist.

13. Pulverbeschichtungsanlage nach Patentanspruch 12,
- bei der der Krümmer (42) eine Innenkurve (42.12) aufweist, die Teil der kurzen Aussenwand (42.1) ist,
- bei der der Krümmer (42) eine Aussenkurve (42.22) aufweist, die Teil der langen Aussenwand (42.2) ist,
- bei der die lange Aussenwand (42.2) einen geraden Abschnitt (42.21) aufweist, an den sich die Aussenkurve (42.22) tangential anschliesst.

## Claims

1. A powder spray coating facility for coating workpieces with coating powder,
- in which a coating cabin (3) and a cyclone (5) are provided,
- in which the coating cabin (3) is connected to the cyclone (5) via a residual powder pipeline (4),
- in which an immersion tube (23) is provided in the outlet section (5.3) of the cyclone (5), with a guide vane apparatus (50; 60; 70; 80; 90) being arranged in said immersion tube (23),
- in which the guide vane apparatus (50; 60; 70; 80; 90) has a plurality of vanes (51) which are formed in such a manner that the air vortex (28) impinging on the vanes (51) can be diverted into a vortex-free air flow (30) at least in part, and
- in which a fanned guide vane (14) is provided in the inlet section (5.1) of the cyclone (5).

2. The powder spray coating facility according to claim 1,
in which the vanes (51) are arranged radially with respect to the longitudinal axis (LA) of the guide vane apparatus (50; 60; 70; 80; 90).

3. The powder spray coating facility according to claim 1 or 2,
in which the vanes (51) in the inlet region (50.1) are curved.

4. The powder spray coating facility according to any one of the preceding claims,
in which at least a part of the vanes (51) in the inlet region (50.1) each make an angle (ε) between 40° and 70° with the longitudinal axis (LA) of the guide vane apparatus (50).

5. The powder spray coating facility according to any one of the preceding claims,
in which the vanes (51) in the outlet region (50.2) are formed in a straight line.

6. The powder spray coating facility according to any one of the preceding claims,
in which at least a part of the vanes (51) in the outlet region (50.2) has an area (51.1) that is aligned parallel to the longitudinal axis (LA).

7. The powder spray coating facility according to any one of the preceding claims,
in which the guide vane apparatus (50; 60; 70; 80; 90) tapers on its downstream side (50.2).

8. The powder spray coating facility according to any one of the preceding claims,
in which the guide vane apparatus (50; 60; 70; 80; 90) has a holder (53), with which it can be arranged in the immersion tube (23).

9. The powder spray coating facility according to any one of the preceding claims,
in which the guide vane apparatus (50; 60; 70; 80; 90) tapers on its upstream side (50.2).

10. The powder spray coating facility according to one of the preceding claims 1 to 9,
in which the fanned vane (14) is arranged tangentially with respect to the powder-air flow entering the cyclone (5).

11. The powder spray coating facility according to any one of the preceding claims,
- in which a residual powder pipeline (13) is arranged along each of the longitudinal sides of the coating cabin (3),
- in which a collecting pipe (130) is provided, which extends transversely to the residual powder pipelines (13) and in which the residual powder pipelines (13) end,
- in which the collecting pipe (130) has a cross-section that widens along the length of the collecting pipe in an essentially continuous manner.

12. The powder spray coating facility according to any one of the preceding claims,
- in which the residual powder pipeline (4) has at least one bend (42; 44) in order to direct the powder-air flow (20'; 20") into a different direction,
- in which the bend (42) has a short curved external wall (42.1) and a long curved external wall (42.2),
- in which the long curved external wall (42.2) has a bulge (42.24).

13. The powder spray coating facility according to claim 12,
- in which the bend (42) has an internal curve (42.12) that is part of the short external wall (42.1),
- in which the bend (42) has an external curve (42.22) that is part of the long external wall (42.2),
- in which the long external wall (42.2) has a straight section (42.21), with the external curve (42.22) tangentially connecting to said straight section (42.21).

## Revendications

1. Installation d'enrobage en poudre pour l'enrobage de pièces à usiner avec de la poudre d'enrobage,
- dans laquelle une cabine d'enrobage (3) et un cyclone (5) sont prévus,
- dans laquelle la cabine d'enrobage (3) est connectée au cyclone (5) par le biais d'une conduite de poudre résiduelle (4),
- dans laquelle un tuyau d'immersion (23) dans lequel un appareil directeur (50 ; 60 ; 70 ; 80 ; 90) est disposé, est prévu dans le trajet de sortie (5.3) du cyclone (5),
- dans laquelle l'appareil directeur (50 ; 60 ; 70 ; 80 ; 90) présente plusieurs pales (51) qui sont réalisées de telle sorte que le tourbillon d'air (28) incident sur les pales (51) peut au moins partiellement être dévié dans un courant d'air exempt de tourbillon (30), et
- dans laquelle une pale directrice en éventail (14) est prévue dans le trajet d'entrée (5.1) du cyclone (5) .

2. Installation d'enrobage en poudre selon la revendication 1,
dans laquelle les pales (51) sont disposées radialement par rapport à l'axe longitudinal (LA) de l'appareil directeur (50 ; 60 ; 70 ; 80 ; 90).

3. Installation d'enrobage en poudre selon la revendication 1 ou 2,
dans laquelle les pales (51) sont courbées dans la région d'entrée (50.1).

4. Installation d'enrobage en poudre selon une des revendications précédentes,
dans laquelle au moins une partie des pales (51) incluent chacune dans la région d'entrée (50.1) un angle (ε) entre 40° et 70° avec l'axe longitudinal (LA) de l'appareil directeur (50).

5. Installation d'enrobage en poudre selon une des revendications précédentes,
dans laquelle les pales (51) sont réalisées en ligne droite dans la région de sortie (50.2).

6. Installation d'enrobage en poudre selon une des revendications précédentes,
dans laquelle au moins une partie des pales (51) présente dans la région de sortie (50.2) une face (51.1) qui est orientée parallèlement à l'axe longitudinal (LA) .

7. Installation d'enrobage en poudre selon une des revendications précédentes,
dans laquelle l'appareil directeur (50 ; 60 ; 70 ; 80 ; 90) se rétrécit sur son côté aval (50.2).

8. Installation d'enrobage en poudre selon une des revendications précédentes,
dans laquelle l'appareil directeur (50 ; 60 ; 70 ; 80 ; 90) présente une fixation (53) avec laquelle il peut être disposé dans le tuyau d'immersion (23).

9. Installation d'enrobage en poudre selon une des revendications précédentes,
dans laquelle l'appareil directeur (50 ; 60 ; 70 ; 80 ; 90) se rétrécit sur son côté amont (50.2).

10. Installation d'enrobage en poudre selon une des revendications 1 à 9,
dans laquelle la pale directrice en éventail (14) est disposée de manière tangentielle au courant d'air de poudre (20) entrant dans le cyclone (5).

11. Installation d'enrobage en poudre selon une des revendications précédentes,
- dans laquelle une conduite de poudre résiduelle (13) est à chaque fois disposée le long des côtés longitudinaux de la cabine d'enrobage (3),
- dans laquelle un tuyau collecteur (130) qui s'étend de manière transversale aux conduites de poudre résiduelle (13) et dans lequel débouchent les conduites de poudre résiduelle (13), est prévu,
- dans laquelle le tuyau collecteur (130) présente une section transversale qui s'élargit de manière essentiellement continue sur la longueur du tuyau collecteur.

12. Installation d'enrobage en poudre selon une des revendications précédentes,
- dans laquelle la conduite de poudre résiduelle (4) présente au moins un coude (42 ; 44) pour conduire le courant d'air de poudre (20' ; 20") dans une autre direction,
- dans laquelle le coude (42) présente une paroi externe courte courbée (42.1) et une paroi externe longue courbée (42.2),
- dans laquelle la paroi externe longue courbée (42.2) présente une courbure (42.24).

13. Installation d'enrobage en poudre selon la revendication 12,
- dans laquelle le coude (42) présente une courbe interne (42.12) qui fait partie de la paroi externe courte (42.1),
- dans laquelle le coude (42) présente une courbe externe (42.22) qui fait partie de la paroi externe longue (42.2),
- dans laquelle la paroi externe longue (42.2) présente une section droite (42.21) à laquelle se raccorde la courbe externe (42.22) de manière tangentielle.
